# EUROPÄISCHE PATENTSCHRIFT

(11) **EP 2 552 726 B1**
(45) Veröffentlichungstag und Bekanntmachung des Hinweises auf die Patenterteilung: **16.03.2016**
(21) Anmeldenummer: 11710700.3
(22) Anmeldetag: 19.03.2011
(51) Int. Cl.: B60K 37/06, G06F 3/048

(54) **VORRICHTUNG ZUR BEDIENUNG UNTERSCHIEDLICHER FUNKTIONEN EINES KRAFTFAHRZEUGS**
DEVICE FOR CONTROLLING DIFFERENT FUNCTIONS OF A MOTOR VEHICLE
DISPOSITIF POUR LA COMMANDE DE DIVERSES FONCTIONS D'UN VÉHICULE À MOTEUR

(30) Priorität: 27.03.2010 DE 102010013170
(43) Veröffentlichungstag der Anmeldung: 06.02.2013
(73) Patentinhaber: Audi AG, 85045 Ingolstadt (DE)
(72) Erfinder: HELOT, Jacques, 85055 Ingolstadt (DE)
(74) Vertreter: Brandt, Kai
(86) Internationale Anmeldenummer: PCT/EP2011/001352
(87) Internationale Veröffentlichungsnummer: WO 2011/120640

(56) Entgegenhaltungen:
- US-A1- 2008 211 779

## Beschreibung

Die Erfindung betrifft eine Vorrichtung zur Bedienung mehrerer unterschiedlicher Funktionen eines Kraftfahrzeugs, mit einem Bedienelement und mit einem berührungssensitiven Feld.

Eine gattungsgemäße Vorrichtung ist aus der US 2008/0211779 A1 bekannt.

In der EP 1 247 686 B1 sind ein Verfahren und eine Vorrichtung zur Auswahl von Fahrzeugfunktionen in einem Kraftfahrzeug beschrieben. Dabei können bestimmte Tasten über einen Bildschirm angewählt und bei Bedarf von einem Benutzer entfernt oder per Drag-and-Drop verschoben werden.

Die DE 10 2006 024 252 A1 beschreibt ein Steuersystem für ein Fahrzeugcockpit, bei welchem unter anderem Wiedergabefensterkonzepte in einer Drag-and-Drop-Funktion zwischen einzelnen Anzeigen verlagert werden können.

Es ist Aufgabe der vorliegenden Erfindung, eine Vorrichtung zur Bedienung mehrerer unterschiedlicher Funktionen eines Kraftfahrzeugs zu schaffen, welche eine möglichst geringe Anzahl an Schaltern aufweist und dabei so intuitiv wie möglich bedient werden kann.

Erfindungsgemäß wird diese Aufgabe durch die in Anspruch 1 genannten Merkmale gelöst.

Die erfindungsgemäße Vorrichtung ermöglicht durch das Konzept eines zentralen Bedienelements, mit dem je nach der von dem Bediener über die Abschnitte des berührungssensitiven Felds vorgenommenen Auswahl die gewünschte der unterschiedlichen Funktionen angesteuert werden kann, eine erhebliche Verringerung der Anzahl an Bedienelementen bzw. Tasten, um dieselbe Anzahl an Funktionen wie zuvor anzusteuern. Ein besonderer Vorteil der erfindungsgemäßen Lösung besteht darin, dass der Benutzer ein und dasselbe Bedienelement verwenden kann, um unterschiedliche Funktionen zu bedienen, wodurch sich eine intuitive und damit besonders einfache Bedienung der erfindungsgemäßen Vorrichtung ergibt. Diese intuitive Bedienung wird dadurch unterstützt, dass an dem Bedienelement oder in unmittelbarer Nähe des Bedienelements eine Anzeigeeinrichtung vorgesehen ist.

Die Verwendung eines berührungssensitiven Felds, in dem die unterschiedlichen Funktionen in jeweiligen Abschnitten hinterlegt sind, ermöglicht eine softwaremäßige Programmierung der Bedienvorrichtung, so dass zum Einen unterschiedliche Funktionen in den Abschnitten hinterlegt werden können und zum Anderen die erfindungsgemäße Vorrichtung für die unterschiedlichsten Kraftfahrzeuge eingesetzt werden kann, wobei in diesem Fall vorteilhafterweise nur durch softwaremäßige Änderungen mit einer von der Hardwareseite prinzipiell identischen Bedienvorrichtung vollkommen unterschiedliche Funktionen gesteuert werden können.

Erfindungsgemäß ist vorgesehen, dass die durch das Bedienelement ansteuerbare Funktion durch Schieben des auf dem ausgewählten Abschnitt dargestellten Symbols in Richtung zu dem Bedienelement hin auswählbar ist. Diese Lösung bietet dem Benutzer vollkommen neue Bedienmöglichkeiten, wobei ein besonderer Vorteil darin zu sehen ist, dass auf diese Weise Fehlbedienungen ausgeschlossen werden können.

Um einen größeren Komfort für eine die erfindungsgemäße Vorrichtung benutzende Bedienperson zu schaffen, kann in einer vorteilhaften Ausgestaltung der Erfindung vorgesehen sein, dass das Bedienelement so ausgebildet ist, dass es einem Benutzer eine haptische Rückmeldung bietet.

Als Beispiel für ein derartiges Bedienelement können ein Drehregler oder ein Kippschalter genannt werden.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
- Fig. 1: eine erste Ausführungsform der erfindungsgemäßen Vorrichtung in einem ersten Betriebszustand;
- Fig. 2: die Vorrichtung aus Fig. 1 in einem zweiten Betriebszustand;
- Fig. 3: die Vorrichtung aus Fig. 1 in einem dritten Betriebszustand;
- Fig. 4: eine zweite Ausführungsform der erfindungsgemäßen Vorrichtung;
- Fig. 5: eine dritte Ausführungsform der erfindungsgemäßen Vorrichtung in einem ersten Betriebszustand; und
- Fig. 6: die Vorrichtung aus Fig. 5 in einem zweiten Betriebszustand.

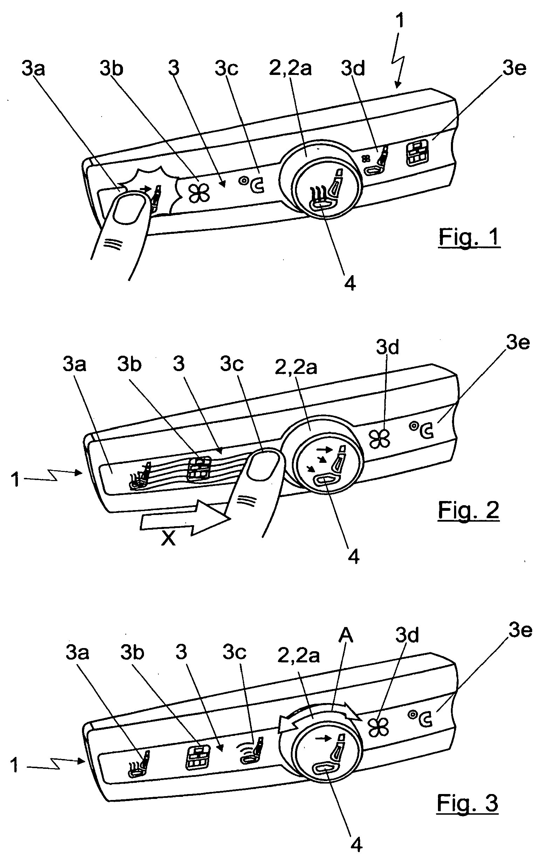

Fig. 1 zeigt eine erste Ausführungsform einer Vorrichtung 1 zur Bedienung mehrerer unterschiedlicher Funktionen eines nicht dargestellten Kraftfahrzeugs, in dem die Vorrichtung 1 angeordnet ist. Vorzugsweise ist die Vorrichtung 1 im Bereich einer nicht dargestellten Mittelkonsole angeordnet.

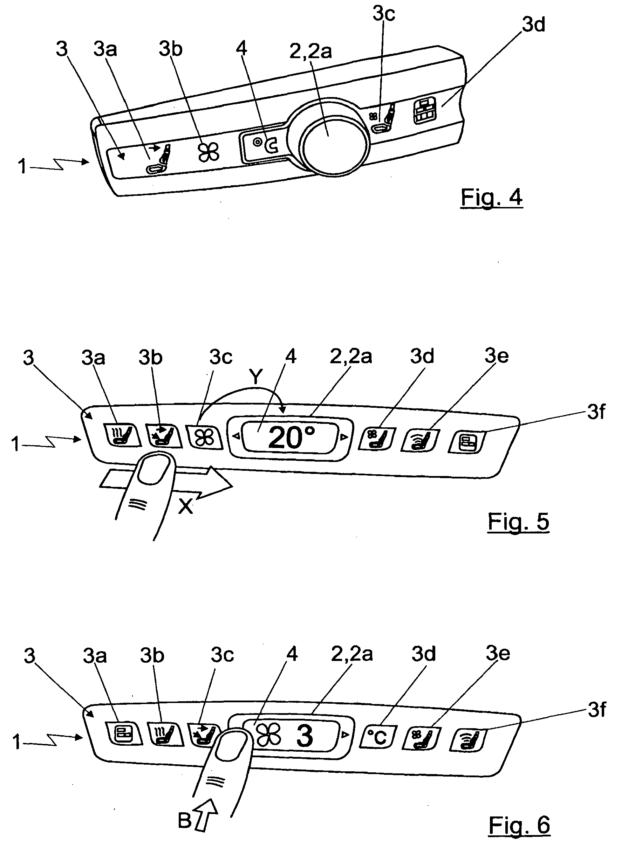

Die Vorrichtung weist ein zentrales Bedienelement 2 auf, welches in der Ausführungsform der Figuren 1 - 3 und der Ausführungsform der Fig. 4 jeweils als eine haptische Rückmeldung bietender Drehregler 2a ausgebildet ist. Von dem Bedienelement 2 erstreckt sich beiderseits ein berührungssensitives Feld 3 weg, das auch als Touchpad bezeichnet werden kann. Das berührungssensitive Feld 3 weist mehrere Abschnitte, im vorliegenden Fall insgesamt fünf Abschnitte, auf, die mit den Bezugszeichen 3a, 3b, 3c, 3d und 3e bezeichnet sind. Den Abschnitten 3a - 3e ist jeweils eine unterschiedliche Funktion zugeordnet und die Abschnitte 3a - 3e sind mit jeweiligen Symbolen versehen, welche einem Bediener der Vorrichtung 1 anzeigen, welche Funktion in dem jeweiligen Abschnitt 3a - 3e momentan hinterlegt ist. Durch Auswählen eines der Abschnitte 3a - 3e wird die jeweilige Funktion ausgewählt. Diese Funktion kann anschließend mit dem Bedienelement 2 angesteuert werden.

Prinzipiell kann vorgesehen sein, dass die durch das Bedienelement 2 ansteuerbare Funktion durch Drücken bzw. Doppelklicken auf den jeweiligen Abschnitt 3a - 3d des berührungssensitiven Felds 3 ausgewählt werden kann, bei den in den Figuren dargestellten erfindungsgemäßen Ausführungsformen wird die durch das Bedienelement 2 ansteuerbare Funktion jedoch gemäß der Erfindung so ausgewählt, dass das auf dem ausgewählten Abschnitt 3a - 3e dargestellte Symbol in Richtung zu dem Bedienelement 2 hin verschoben wird.

Zusätzlich ist bei der Ausführungsform der Figuren 1 - 3 an dem Bedienelement 2 eine Anzeigeeinrichtung 4 vorgesehen, in welcher die jeweils ausgewählte Funktion angezeigt wird. Die Anzeigeeinrichtung 4 ist in der Ausführungsform gemäß der Figuren 1 - 3 also als auf dem Bedienelement 2 vorgesehenes Display ausgebildet. Bei dem in Fig. 1 dargestellten Betriebszustand der Vorrichtung 1 ist auf der Anzeigeeinrichtung 4 des Bedienelements 2 das Symbol für eine Sitzheizung zu erkennen. In diesem Betriebszustand kann der Benutzer durch Betätigen des Bedienelements 2 also den Betrieb der Sitzheizung steuern. Der Benutzer wählt im vorliegenden Fall jedoch durch Berühren des Abschnitts 3a und Verschieben des darin angezeigten Symbols, welches eine Belüftungsrichtung andeutet, in Richtung des Bedienelement 2 diese Belüftungsrichtung aus, so dass das Symbol für die Belüftungsrichtung sich neben dem Bedienelement 2 befindet und außerdem in der Anzeigeeinrichtung 4 des Bedienelements 2 angezeigt wird. Die Verschiebung des Symbols erfolgt gemäß dem Pfeil "X" in Fig. 2. Anschließend kann, wie in Fig. 3 mit dem Pfeil "A" angedeutet, der Drehregler 2a verdreht werden, um eine bestimmte Einstellung der Belüftung auszuwählen. Wie aus den Figuren 2 und 3 zu erkennen ist, werden durch das Verschieben des auf dem Abschnitt 3a abgebildeten Symbols in Richtung des Bedienelements 2 auch die anderen Symbole auf den Abschnitten 3b - 3e verschoben. Dadurch sind den Abschnitten 3a - 3e die unterschiedlichen Funktionen nur temporär zugeordnet. Hierbei sollte beachtet werden, dass sich zwar die Symbole auf den einzelnen Abschnitten verändern können, dass die Abschnitte selbst jedoch an ein und derselben Stelle bleiben. Prinzipiell wäre es auch möglich, durch entsprechendes Berühren und Verschieben die Reihenfolge der Symbole auf den Abschnitten 3a - 3e zu ändern.

Wenn das als Drehregler 2a ausgebildete Bedienelement 2 die Anzeigeeinrichtung 4 aufweist, so ist vorzugsweise nur ein Ring am äußeren Umfang des Bedienelements 2 beweglich gelagert, so dass das auf der Anzeigeeinrichtung 4 angezeigte Symbol stets in einer senkrechten Position ausgerichtet bleibt.

Im vorliegenden Fall handelt es sich bei den in den Abschnitten 3a - 3d des berührungssensitiven Felds 3 hinterlegten Funktionen um Funktionen einer Klimaanlage, prinzipiell wäre die Vorrichtung 1 jedoch auch zur Bedienung anderer Funktionen, beispielsweise den Funktionen einer Radioanlage oder allgemeinen Fahrzeugfunktionen, wie zum Beispiel den Funktionen eines, gegebenenfalls automatischen, Einparksystems, eines Heck- oder Seitenrollos, eines Cabrioverdecks, eines Fahrstreifenassistenzsystems, eines Parklenksystems, einer Sport- oder Komforteinstellung usw. einsetzbar.

Eine der in Fig. 1 dargestellten Vorrichtung sehr ähnliche Vorrichtung ist in Fig. 4 dargestellt. Hierbei sind lediglich vier Abschnitte 3a, 3b, 3c und 3d zu erkennen, prinzipiell kann das berührungssensitive Feld 3 in sämtlichen hierin beschriebenen Ausführungsformen jedoch eine annähernd beliebige Anzahl an betätigbaren Abschnitten aufweisen. Im Unterschied zu der Ausführungsform der Figuren 1 - 3 ist bei der Ausführungsform gemäß Fig. 4 die Anzeigeeinrichtung 4 nicht auf, sondern neben dem Bedienelement 2 vorgesehen. In der dargestellten Betriebssituation kann mittels des ebenfalls als Drehregler 2a ausgebildeten Bedienelements 2 die Temperatur im Innenraum des Kraftfahrzeugs eingestellt werden. Die in Fig. 4 dargestellte Ausführungsform der Vorrichtung 1 ist dahingehend einfacher, dass die Anzeigeeinrichtung 4 in das berührungssensitive Feld 3 integriert werden kann, in dem bereits mehrere Symbole auf den jeweiligen Abschnitten 3a - 3d vorhanden sind, so dass diese Ausführungsform kostengünstiger ausgeführt werden kann.

Eine weitere alternative Ausführungsform der Vorrichtung 1 ist in den Figuren 5 und 6 dargestellt. Hierbei ist das Bedienelement 2 als Kippschalter 2b ausgebildet. Der Kippschalter 2b bietet wie auch der Drehregler 2a eine haptische Rückmeldung für den Benutzer. Ähnlich wie bei den oben beschriebenen Ausführungsformen ist doch wiederum das berührungssensitive Feld 3 vorgesehen, welches in diesem Fall sechs Abschnitte 3a, 3b, 3c, 3d, 3e und 3f aufweist. Wiederum wird durch Verschieben eines der Symbole, im vorliegenden Fall des Ventilatorsymbols auf dem Abschnitt 3c in Richtung zu dem Bedienelement 2 hin, diese Funktion in dem Bedienelement 2 übernommen und kann, wie in Fig. 6 dargestellt, entsprechend gesteuert werden. Die Ansteuerung des Kippschalters 2 erfolgt dabei durch Drücken gemäß dem Pfeil "B" in Fig. 6. Durch den Pfeil "Y" ist dargestellt, wie das Ventilatorsymbol in der in diesem Fall auf bzw. in dem Bedienelement 2 vorgesehenen Anzeigeeinrichtung 4 übernommen wird.

## Patentansprüche

1. Vorrichtung (1) zur Bedienung mehrerer unterschiedlicher Funktionen eines Kraftfahrzeugs, mit einem Bedienelement (2), mit welchem jeweils eine der mehreren unterschiedlichen Funktionen ansteuerbar ist, mit einem berührungssensitiven Feld (3), welches mehrere Abschnitte (3a - 3e) aufweist, denen jeweils zumindest temporär eine der unterschiedlichen Funktionen zugeordnet und die mit der jeweiligen Funktion entsprechenden Symbolen versehen sind, wobei durch Auswählen eines der Abschnitte (3a - 3e) eine Funktion auswählbar ist, wobei mittels des Bedienelements (2) jeweils die zuvor aus dem berührungssensitiven Feld (3) ausgewählte Funktion ansteuerbar ist, und wobei an dem Bedienelement (2) oder in unmittelbarer Nähe des Bedienelements (2) eine Anzeigeeinrichtung (4) vorgesehen ist, in welcher die jeweils ausgewählte Funktion mittels eines Symbols anzeigbar ist,
**dadurch gekennzeichnet, dass**
die durch das Bedienelement (2) ansteuerbare Funktion durch Schieben des auf dem ausgewählten Abschnitt (3a - 3e) dargestellten Symbols in Richtung zu dem Bedienelement (2) hin auswählbar ist.

2. Vorrichtung nach Anspruch 1,
**dadurch gekennzeichnet, dass**
das Bedienelement (2) so ausgebildet ist, dass es einem Benutzer eine haptische Rückmeldung bietet.

3. Vorrichtung nach Anspruch 2,
**dadurch gekennzeichnet, dass**
das Bedienelement (2) als Drehregler (2a) ausgebildet ist.

4. Vorrichtung nach Anspruch 2,
**dadurch gekennzeichnet, dass**
das Bedienelement (2) als Kippschalter (2b) ausgebildet ist.

5. Vorrichtung nach einem der Ansprüche 1 bis 4,
**dadurch gekennzeichnet, dass**
die Anzeigeeinrichtung (4) durch ein auf dem Bedienelement (2) vorgesehenes Display gebildet ist.

6. Vorrichtung nach einem der Ansprüche 1 bis 5,
**dadurch gekennzeichnet, dass**
die in den Abschnitten (3a - 3e) des berührungssensitiven Felds (3) hinterlegten Funktionen Funktionen einer Klimaanlage sind.

7. Vorrichtung nach einem der Ansprüche 1 bis 5,
**dadurch gekennzeichnet, dass**
die in den Abschnitten (3a - 3e) des berührungssensitiven Felds (3) hinterlegten Funktionen Funktionen einer Radioanlage sind.

8. Vorrichtung nach einem der Ansprüche 1 bis 5,
**dadurch gekennzeichnet, dass**
die in den Abschnitten (3-a - 3e) des berührungssensitiven Felds (3) hinterlegten Funktionen Funktionen eines Navigationsgeräts sind.

## Claims

1. Device (1) for controlling a plurality of different functions of a motor vehicle, comprising an operating element (2) with which one of the plurality of different functions can be actuated, having a touch-sensitive field (3) which has a plurality of sections (3a - 3e), each of which is at least temporarily assigned one of the different functions and each of which is provided with symbols corresponding to the respective function, wherein a function can be chosen by selecting one of the sections (3a - 3e), wherein the function previously selected from the touch-sensitive field (3) can be actuated by means of the operating element (2), and wherein a display device (4) is provided on the operating element (2) or in the immediate vicinity of the operating element (2), said display device (4) being capable of displaying the particular function selected by means of a symbol,
**characterised in that**
the function that can be actuated by the operating element (2) can be selected by sliding the symbol shown on the selected section (3a - 3e) towards the operating element (2).

2. Device according to claim 1,
**characterised in that**
the operating element (2) is embodied to provide a user with haptic feedback.

3. Device according to claim 2,
**characterised in that**
the operating element (2) is embodied as a control dial (2a).

4. Device according to claim 2,
**characterised in that**
the operating element (2) is embodied as a rocker switch (2b).

5. Device according to one of claims 1 to 4,
**characterised in that**
the display device (4) is formed by a display provided on the operating element (2).

6. Device according to one of claims 1 to 5,
**characterised in that**
the functions which are stored in the sections (3a - 3e) of the touch-sensitive field (3) are functions of an air-conditioning system.

7. Device according to one of claims 1 to 5,
**characterised in that**
the functions which are stored in the sections (3a - 3e) of the touch-sensitive field (3) are functions of a radio system.

8. Device according to one of claims 1 to 5,
**characterised in that**
the functions which are stored in the sections (3a - 3e) of the touch-sensitive field (3) are functions of a navigation device.

## Revendications

1. Dispositif (1) pour desservir plusieurs fonctions différentes d'un véhicule automobile, comprenant un élément de commande (2), avec lequel on peut commander respectivement l'une des multiples fonctions différentes, un bloc tactile (3) qui présente plusieurs sections (3a à 3e) auxquelles est affectée respectivement au moins temporairement l'une des fonctions différentes et qui sont pourvues de symboles correspondant à la fonction respective, dans lequel, en choisissant l'une des sections (3a à 3e), on peut choisir une fonction, dans lequel, au moyen de l'élément de commande (2), on peut commander respectivement la fonction choisie préalablement dans le bloc tactile (3) et dans lequel il est prévu sur l'élément de commande (2) ou au voisinage immédiat de l'élément de commande (2) un dispositif d'affichage (4) dans lequel la fonction respectivement choisie peut être affichée au moyen d'un symbole,
**caractérisé en ce que** :
la fonction commandée par l'élément de commande (2) peut être choisie en faisant glisser le symbole représenté sur la section choisie (3a à 3e) en direction de l'élément de commande (2).

2. Dispositif selon la revendication 1,
**caractérisé en ce que** :
l'élément de commande (2) est conçu de sorte qu'il offre à l'utilisateur un accusé de réception haptique.

3. Dispositif selon la revendication 2,
**caractérisé en ce que** :
l'élément de commande (2) est conçu sous la forme d'un régulateur de rotation (2a).

4. Dispositif selon la revendication 2,
**caractérisé en ce que** :
l'élément de commande (2) est conçu sous la forme d'un commutateur basculant (2b).

5. Dispositif selon l'une quelconque des revendications 1 à 4,
**caractérisé en ce que** :
le dispositif d'affichage (4) est formé par un affichage prévu sur l'élément de commande (2).

6. Dispositif selon l'une quelconque des revendications 1 à 5,
**caractérisé en ce que** :
les fonctions affichées dans les sections (3a à 3e) d'un bloc tactile (3) sont les fonctions d'un climatiseur.

7. Dispositif selon l'une quelconque des revendications 1 à 5,
**caractérisé en ce que** :
les fonctions affichées dans les sections (3a à 3e) d'un bloc tactile (3) sont les fonctions d'une installation radio.

8. Dispositif selon l'une quelconque des revendications 1 à 5,
**caractérisé en ce que** :
les fonctions affichées dans les sections (3a à 3e) d'un bloc tactile (3) sont les fonctions d'un appareil de navigation.
